(19) Europäisches Patentamt
European Patent Office
Office européen des brevets

(11) **EP 3 889 552 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **20168003.0**

(22) Anmeldetag: **03.04.2020**

(51) Internationale Patentklassifikation (IPC):
**G01F 1/667** (2022.01)

(52) Gemeinsame Patentklassifikation (CPC):
**G01F 1/667**

(54) **DURCHFLUSSMESSGERÄT**

FLOW METER

DÉBITMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.10.2021 Patentblatt 2021/40**

(73) Patentinhaber: **SICK Engineering GmbH**
**01458 Ottendorf-Okrilla (DE)**

(72) Erfinder:
• **Klemm, Dr. Markus**
**01159 Dresden (DE)**
• **Schulz, Dr. Christian**
**01069 Dresden (DE)**
• **Starke, Dr. Eric**
**01796 Pirna (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
EP-A1- 3 521 773      DE-U1- 29 719 730
US-A1- 2006 117 867   US-A1- 2014 366 642
US-A1- 2020 072 649

**Beschreibung**

Die Erfindung betrifft ein Durchflussmessgerät auf Ultraschallbasis.

Für die Bestimmung der Strömungsgeschwindigkeit oder des Durchflusses auf Ultraschallbasis sind unterschiedliche Messprinzipien bekannt. Bei einem Dopplerverfahren wird die je nach Strömungsgeschwindigkeit unterschiedliche Frequenzverschiebung eines innerhalb des strömenden Fluid reflektierten Ultraschallsignals ausgewertet. Bei einem Differenzlaufzeitverfahren wird ein Paar Ultraschallwandler am Umfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen. Für eine hohe Messgenauigkeit bei unsymmetrischen Geschwindigkeitsverteilungen über dem Strömungsquerschnitt, sind mehrere Messpfade erforderlich, die nicht durch die Rohrachse verlaufen, so genannte nicht-diametrale Messpfade bzw. Sekantenpfade.

Die zur Erzeugung des Ultraschalls eingesetzten Ultraschallwandler müssen den Ultraschall in das Fluid einkoppeln. Eine verbreitete Lösung besteht darin, die Ultraschallwandler mit direktem Kontakt zum Fluid in die Leitung hineinragen zu lassen. Die Nachteile sind eine Störung der Strömung und damit ungenaue Messergebnisse, ein direkter Kontakt mit dem Fluid und dessen Druck und Temperatur und mögliche Ablagerungen von Verunreinigungen aus dem Fluid.

Grundsätzlich sind auch Techniken bekannt, bei denen die Innenwand vollständig geschlossen bleibt, indem mittels der sogenannten Clamp-On-Montage Ultraschallwandler von außen an der Leitung befestigt werden und der Ultraschall dann nachteilig durch die Rohrwand in das Medium eindringen muss.

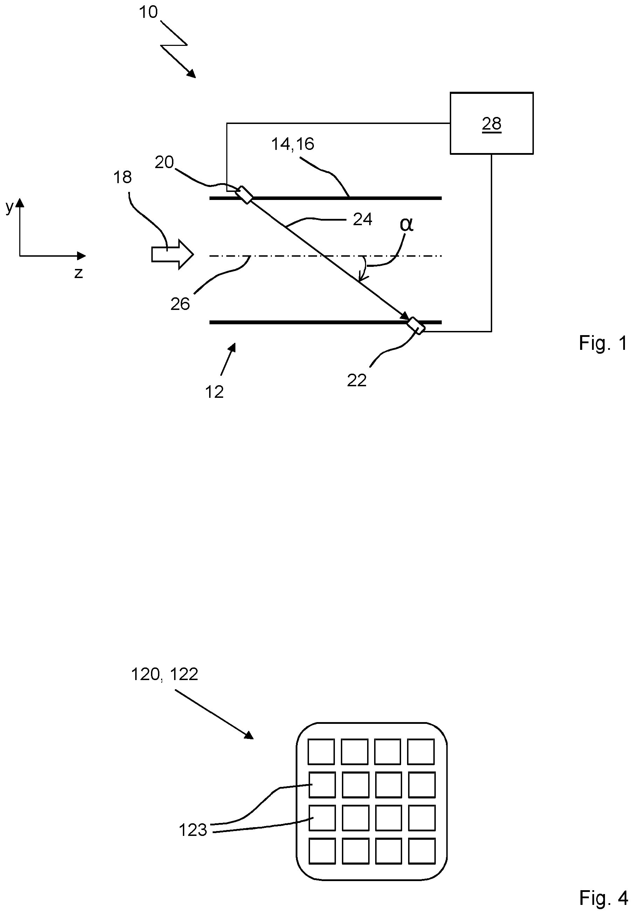

Aus der Doktorarbeit "Development of piezoelectric and electrodynamic flexural transducers for air-coupled ultrasonics" von Tobias Eriksson, Univ. of Warwick, Sept. 2016, herunterladbar unter https://pugwash.lib.warwick.ac.uk/record=b3084015~S15 ist der Einsatz von sogenannten "phased-array" Ultraschallwandlereinheiten bekannt. Ein "phased-array" besteht aus einzelnen, in einem Array angeordneten Ultraschallwandlern, die zusammen in Überlagerung ein Ultraschallsignal abgeben, dessen Abstrahlrichtung durch Änderung der einzelnen Phasen der einzelnen Ultraschallwandler änderbar ist. Diese "phased-array" Ultraschallwandlereinheiten werden in Öffnungen eines Strömungskanals eingesetzt und sind dann möglichst bündig mit der Rohrwand und können je nach Ansteuerung Ultraschallsignale in verschiedene Winkel abstrahlen. Wie in der Doktorarbeit ausgeführt, kann dadurch ein einziges Paar von phased-array-Ultraschallwandlereinheiten mehrere Paare von traditionellen Ultraschallwandlern ersetzen, wie dies in Figur 1.1 der Doktorarbeit dargestellt ist.

Eine ähnliche Anordnung ist aus der US 2014/0366642 A1 und aus der US 2006/117867 A1 bekannt.

Eine Anwendung solcher phased-array Ultraschallwandlereinheiten ist beispielsweise auch offenbart in Kang, Lei, Feeney, Andrew, Su, Riliang, Lines, David, Jäger, Axel, Wang, Han, Arnaudov, Yavor Emilov, Ramadas, Sivaram Nishal, Kupnik, Mario and Dixon, Steve M. (2017) Two-dimensional flexural ultrasonic phased-array for flow measurement. In: 2017 IEEE International Ultrasonics Symposium (IUS), Washington, DC, USA, 6-9 Sep 2017. Published in: 2017 IEEE International: Ultrasonics Symposium (IUS) ISSN 1948-5727. Hier werden die phased-array Ultraschallwandlereinheiten verwendet, um den Verwehungseffekt bei hohen Strömungsgeschwindigkeiten zu kompensieren.

Allerdings werden in Zusammenhang mit phased-array Ultraschallwandlereinheiten nur diametrale Messpfade, die durch die Rohrachse verlaufen, offenbart. Bei nicht axialsymmetrischen Strömungsprofilen ergeben diametrale Messpfade ungenaue Messwerte, da das Strömungsprofil nur unzureichend über den Querschnitt erfasst wird.

Ausgehend von diesem Stand der Technik ist es Aufgabe der Erfindung, eine verbesserte Vorrichtung zur Messung des Durchflusses eines Fluids bereitzustellen, mit der insbesondere die vorgenannten Nachteile vermieden werden können, also unter Verwendung von Sekantenpfaden eine hohe Messgenauigkeit mit guter Signalqualität zu liefern.

Diese Aufgabe wird gelöst durch ein Durchflussmessgerät zur Messung des Durchflusses eines Fluids durch eine Rohrleitung mit den Merkmalen des Anspruchs 1.

Das erfindungsgemäße Durchflussmessgerät umfasst

- einen Messaufnehmer, der eine Rohrleitung für das Fluid aufweist,
- zwei, in Längsrichtung der Rohrleitung beabstandete phased-array Ultraschallwandlereinheiten, die Ultraschallsignale in verschiedene Winkel abstrahlen und empfangen können,
- eine Steuer- und Auswerteeinheit zur Ansteuerung der Ultraschallwandlereinheiten und Auswertung der empfangenen Ultraschallsignale und Bestimmen des Durchflusses unter Verwendung der Laufzeit der Ultraschallsignale auf den Messpfaden,

- wobei die Ultraschallwandlereinheiten zwischen sich je nach Winkel der abgestrahlten Ultraschallsignale wenigstens zwei Messpfade definieren, auf denen die Ultraschallsignale von einer zur anderen Ultraschallwandlereinheit gelangen,
- wobei wenigstens einer der Messpfade wenigstens eine Reflexion an einer Rohrwand der Rohrleitung aufweist und durch die Reflexion bzw. Reflexionen Pfadabschnitte definiert sind. Ein Pfadabschnitt ist also immer der Teil eines Messpfades, auf dem sich der Ultraschall ungehindert geradlinig ausbreiten kann.

Erfindungsgemäß liegen die Ultraschallwandlereinheiten in einem Einbauwinkel, der zwischen 20° und 140° liegt.

Unter Einbauwinkel ist der Winkel zwischen den beiden Ultraschallwandlereinheiten zu verstehen, der sich ergibt, wenn man in Längsrichtung der Rohrleitung schaut und die relative Lage der Ultraschallwandlereinheiten auf dem Rohrumfang zueinander anschaut. Einem Einbauwinkel von 180° würde einer diametralen Montage entsprechen. Einem Einbauwinkel von 0° entspricht der Anordnung wie sie in Figur 1.1 der eingangs erwähnten Doktorarbeit gezeigt ist.

Mit der erfindungsgemäßen Anordnung sind verschiedene Messpfade mit nur zwei Ultraschallwandlereinheiten möglich, wobei diese Messpfade, bzw. die Pfadabschnitte dieser Messpfade, in sinnvollen und unterschiedlichen Bereichen des Querschnitts liegen, so dass der Fluss über den Querschnitt der Rohrleitung besser erfasst wird.

Dabei haben die Erfinder herausgefunden, dass es besonders vorteilhaft ist, wenn der Einbauwinkel insbesondere zwischen 30° und 50° liegt.

Besonders vorteilhaft ist, wenn für die Pfadabschnitte gilt, das r/R zwischen 0,3 und 0,65 liegt, wobei R der Rohrdurchmesser ist und r der kürzeste Abstand eines Pfadabschnittes zum Mittelpunkt ist. Dann liegen die Messpfade mit ihren Pfadabschnitten besonders günstig, um die Strömung sinnvoll abzutasten. Sie liegen außermittig aber auch nicht zu nahe am Rand. Die Pfade liegen dann auch näherungsweise auf Gaußschen Knoten. Das ist vorteilhaft, denn im Gaußschen Knoten ändert sich das Strömungsprofil nicht mit der Geschwindigkeit des Fluids. Insgesamt ergibt das eine höhere Messgenauigkeit.

In vorteilhafter Weiterbildung der Erfindung liegen nicht mehr als fünf Reflexionen pro Messpfad vor. Messpfade mit mehr als fünf Reflexionen liefern keinen Mehrwert, denn viele der möglichen Messpfade mit mehr als fünf Reflexionen sind nicht sinnvoll verwendbar, da deren Pfadabschnitte beispielsweise entlang des Randes des Rohres gelegen sind oder zu sehr in der Mitte liegen und daher fast schon diametral verlaufen.

Im Folgenden wird die Erfindung anhand von Ausführungsbeispielen unter Bezugnahme auf die Zeichnung im Einzelnen erläutert. In der Zeichnung zeigen:

Fig. 1    eine schematische Darstellung eines Durchflussmessgeräts nach dem Stand der Technik;
Fig. 2    eine schematische Darstellung eines erfindungsgemäßen Durchflussmessgeräts in Rohrlängsrichtung gesehen;
Fig. 3    eine schematische Darstellung des erfindungsgemäßen Durchflussmessgeräts aus Fig. 2 quer zur Rohrlängsrichtung gesehen;
Fig. 4    eine schematische Ansicht eines phased-array Ultraschallwandlers;
Fig. 5    Darstellungen von Messpfaden in Rohrlängsrichtung gesehen;
Fig. 6    eine Ansicht wie Fig. 2.

In Fig. 1 ist ein Durchflussmessgerät 10 nach dem Stand der Technik dargestellt zur allgemeinen Erläuterung der Funktion eines gattungsgemäßen Durchflussmessgeräts. Das Durchflussmessgerät 10 umfasst einen Messaufnehmer 12, der eine Rohrleitung 14 für das Fluid mit einer Rohrwand 16 aufweist. Das durch die Rohrleitung 14 strömende Fluid, ein Gas oder eine Flüssigkeit, ist in Fig. 1 mit einem breiten Pfeil 18 dargestellt und strömt in z-Richtung entlang einer Längsrichtung 26 der Rohrleitung 14.

Weiter weist das Durchflussmessgerät 10 zwei Ultraschallwandler 20 und 22 auf, die zwischen sich in der Rohrleitung 14 einen Messpfad 24 definieren. Die Ultraschallwandler 20 und 22 sind in Strömungsrichtung z versetzt angeordnet, also sie sind in Längsrichtung 26 der Rohrleitung 14 beabstandet. Dadurch liegt der Messpfad 24 nicht orthogonal zur Strömungsrichtung z, sondern in einem Winkel α. Jede der Ultraschallwandlereinheiten 20 und 22 kann als Sender oder Empfänger arbeiten und wird von einer Steuer- und Auswerteeinheit 28 gesteuert.

Aus dem Winkel α und dem Rohrdurchmesser D ergibt sich die Länge L des Messpfades 24 im fluiden Medium. Ultraschallsignale, die als Ultraschallwellenpakete auf dem Messpfad 24 in entgegengesetzte Richtungen ausgesandt und empfangen werden, haben also einmal eine Komponente in Richtung der Strömungsrichtung z und ein anders Mal entgegen der Strömungsrichtung z und werden somit mit der Strömung 18 beschleunigt bzw. entgegen der Strömung 18 abgebremst. Die Strömungsgeschwindigkeit v des Fluids 18 berechnet sich in diesem Laufzeitverfahren nach

$$v = \frac{t_2 - t_1}{2 * t_2 * t_1} * \frac{L}{\cos(\alpha)} \qquad\qquad (1)$$

worin $t_2$ und $t_1$ die Schalllaufzeiten bezeichnen, die von den abgestrahlten Ultraschallwellenpaketen benötigt werden, um den Messpfad 24 stromauf- bzw. stromabwärts zurückzulegen und in der Steuer- und Auswerteeinheit 28 erfasst werden. Mit dem Rohrquerschnitt und der Strömungsgeschwindigkeit v des Fluids 18 lässt sich dann der Durchfluss berechnen.

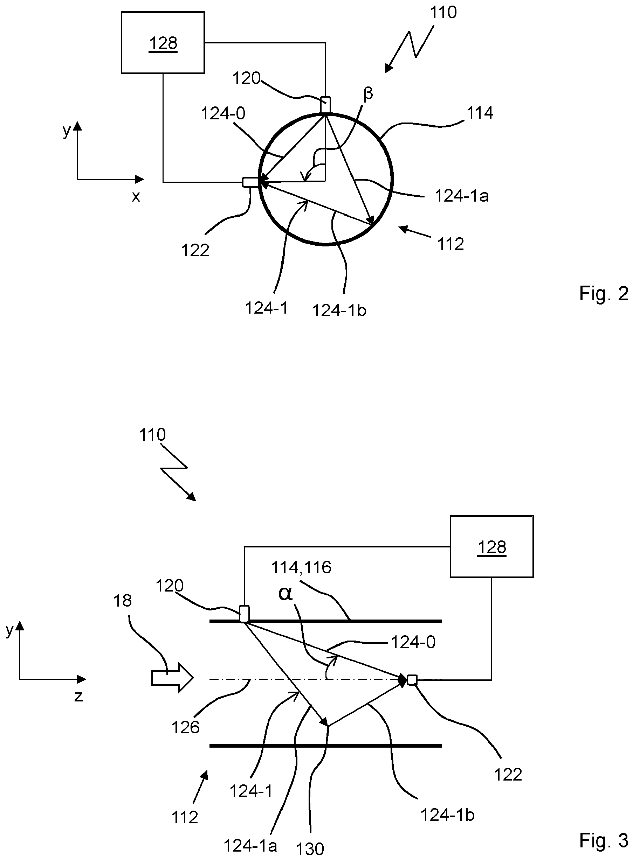

Nach diesem Prinzip arbeitet auch das erfindungsgemäße Durchflussmessgerät 110, das in Fig. 2 und 3 sehr schematisch dargestellt ist. Es weist ebenso einen Messaufnehmer 112 mit Rohrleitung 114 sowie zwei Ultraschallwandlereinheiten 120 und 122 in einer Rohrwand 116 und eine Steuer- und Auswerteeinheit 128 auf.

Die Ultraschallwandlereinheiten 120 bzw. 122 sind allerdings keine "einfachen" Ultraschallwandler, sondern sind als phased-array Ultraschallwandlereinheiten ausgebildet. Sie weisen, wie in der schematischen Draufsicht der Fig. 4 auf eine schallabstrahlende Seite der Ultraschallwandlereinheit 120 bzw. 122 schematisch dargestellt ist, jeweils ein zweidimensionales Array von einzeln ansteuerbaren Ultraschallwandlern 123 auf. Die einzelnen Ultraschallwandler 123 werden zum Ausstrahlen eines Ultraschallpakets von der Steuer- und Auswerteeinheit 128 so angesteuert, dass sie untereinander jeweils einen Phasenversatz aufweisen, wobei der Phasenversatz so gewählt ist, dass die Überlagerung der daraus resultierenden Ultraschallwellen zu einem Ultraschallwellenpaket führt, das sich entlang eines bestimmten Messpfades 124 bewegt. Die Lage des Messpfades 124 wird also durch den Phasenversatz bestimmt und sollte so ausgerichtet sein, dass das Ultraschallwellenpaket die andere Ultraschallwandlereinheit erreicht.

Die Erfindung steckt im Wesentlichen in der Positionierung der beiden Ultraschallwandlereinheiten 120 und 122 und der Wahl der möglichen Messpfade 124.

In den Fig. 2 und 3 ist eine beispielhafte Anordnung der Ultraschallwandlereinheiten 120 und 122 gezeigt. Um die relative Anordnung der Ultraschallwandler 120 und 122 zu beschreiben wird für die Zwecke dieser Beschreibung ein Einbauwinkel β definiert. Unter dem Einbauwinkel β ist der Winkel zwischen den beiden Ultraschallwandlereinheiten 120 und 122 zu verstehen, der sich ergibt, wenn man in Längsrichtung entlang der Mittelachse 126 der Rohrleitung 114 schaut und die relative Lage der Ultraschallwandlereinheiten 120 und 122 auf dem Rohrumfang zueinander anschaut (Fig. 2). Oder anders ausgedrückt, ist das der Winkel β, den in der Längsrichtungssicht die beiden Verbindungen zwischen Ultraschallwandler 120 bzw. 122 und Mittelachse 126 einschließen. Ein Einbauwinkel von 180° würde einer diametralen Montage entsprechen. In Fig. 2 ist ein Einbauwinkel β von 90° dargestellt.

Gemäß der Erfindung liegen die Ultraschallwandlereinheiten 120 und 122 in einem Einbauwinkel, der zwischen 20° und 140° liegt und insbesondere zwischen 30° und 50°.

Für die Beispiele aus dieser Beschreibung (Fig. 2, 3 und 5) wurde ein Einbauwinkel β von 90° gewählt, da sich ein solcher zeichnerisch und zur beschreibenden Erläuterung am Besten eignet.

In den Fig. 2 und 3 sind in dieser Ultraschallanordnung zwei Messpfade 124-0 und 124-1 beispielhaft eingezeichnet. Auf dem ersten Messpfad 124-0 gelangen die Ultraschallsignale auf direktem Weg von der einen Ultraschallwandlereinheit 120 bzw. 122 zur anderen Ultraschallwandlereinheit 122 bzw. 120. Dieser direkte Messpfad 124-0 beinhaltet also keine Reflexion an der Rohrwand 116. Das soll auch durch den Zusatz "-0" zum Bezugszeichen ausgedrückt sein. Auf dem anderen eingezeichneten Messpfad 124-1 erfahren die Ultraschallsignale eine Reflexion an einer Stelle 130 an der Rohrwand 116 (auch ausgedrückt durch den Zusatz "-1"). Durch die Reflexion ist der Messpfad 124-1 in zwei Pfadabschnitte 124-1a und 124-1b aufgeteilt. Die beiden Pfadabschnitte 124-1a und 124-1b sind gleich lang, auch wenn dies in der Zeichenebene der eigentlich dreidimensionalen Anordnung der Fig. 3 anders aussieht. Ein Pfadabschnitt, hier 124-1a bzw. 124-1b ist also immer der Teil eines Messpfades, hier 124, auf dem sich der Ultraschall ungehindert geradlinig ausbreiten kann.

Mit der erfindungsgemäßen Anordnung, bestehend aus den zwei Ultraschallwandlereinheiten 120 und 124 in einem Einbauwinkel β sind selbstverständlich auch andere als die in Fig. 2 und 3 dargestellten Messpfade 124-0 und 124-1 möglich.

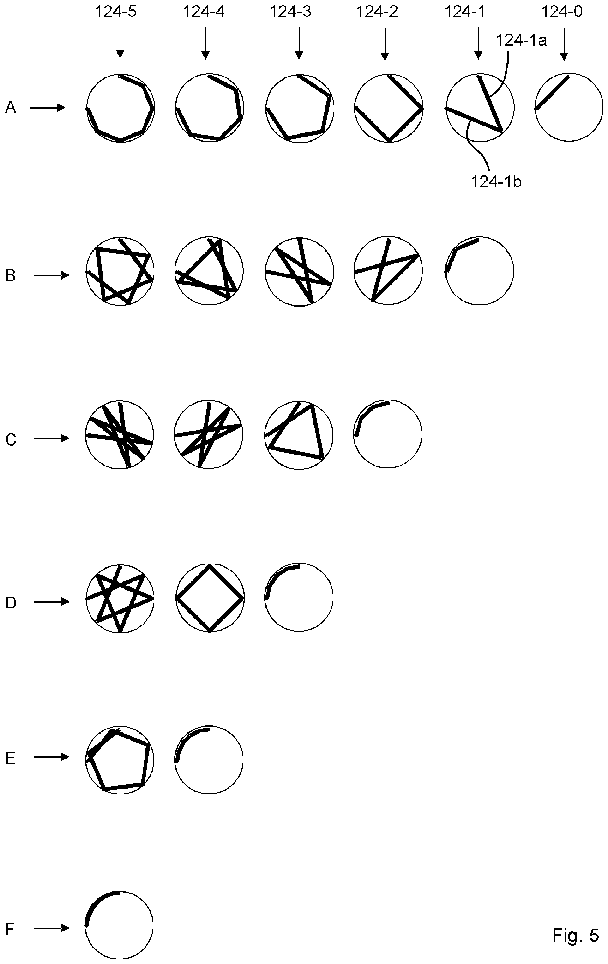

Mögliche Messpfade 124 sind in Fig. 5 vereinfacht dargestellt. Das sind Messpfade mit 0 bis 5 Reflexionen. Die Messpfade 124-0 mit keiner Reflexion und 124-1 mit einer Reflexion und Pfadabschnitten 124-1a und 124-1b wurden oben unter Bezugnahme auf die Fig. 2 und 3 erläutert. Wie sich unschwer erkennen lässt, sind bei N Reflexionen immer N+1 Alternativen für den Messpfad möglich. Diese Pfadalternativen sind mit Großbuchstaben A bis F gekennzeichnet. So gibt es zum Beispiel für den Messpfad 124-1 mit nur einer Reflexion noch eine Alternative B, bei der die Pfadabschnitte relativ nahe an der Wand liegen.

Die Erfinder haben herausgefunden, dass in vorteilhafter Ausbildung der Erfindung nicht mehr als fünf Reflexionen pro Messpfad vorliegen sollten, also das Design der Messpfade 124 auf die in Fig. 5 Dargestellten begrenzt sein sollte. Messpfade mit mehr als fünf Reflexionen liefern keinen Mehrwert, denn viele der möglichen Messpfade mit mehr als fünf Reflexionen sind nicht sinnvoll verwendbar, da deren Pfadabschnitte beispielsweise entlang des Randes des Rohres gelegen sind (wie in Fig. 5 bereits für Messpfad 124-5 in der Alternative F erkennbar) oder zu sehr in der Mitte liegen und daher fast schon diametral verlaufen (wie Messpfad 124-5 in der Alternative C in der Tendenz zeigt). Wenn die Messpfade in den aufgezeigten Grenzen bleiben, liegen die Pfadabschnitte dieser Messpfade 124 in sinnvollen und unterschiedlichen Bereichen des Querschnitts, so dass der Durchfluss über den Querschnitt der Rohrleitung 114 besser erfasst wird.

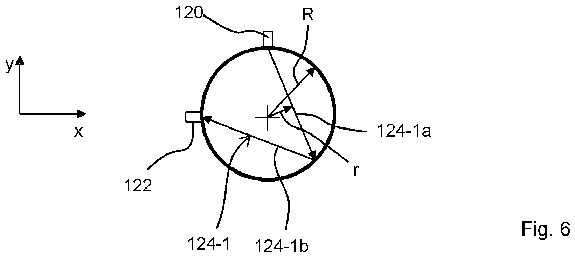

Weiter haben die Erfinder herausgefunden, dass es besonders vorteilhaft ist, wenn für die Pfadabschnitte gilt, dass r/R zwischen 0,3 und 0,65 liegt, wobei R der Rohrdurchmesser ist und r der kürzeste Abstand eines Pfadabschnittes zum Mittelpunkt ist (in Fig. 6 anhand des Pfadabschnitts 124-1a gezeigt). Dann liegen die Messpfade 124 mit ihren Pfadabschnitten besonders günstig, um die Strömung 18 sinnvoll abzutasten. Sie liegen außermittig aber auch nicht zu nahe am Rand. Die Pfade liegen dann auch näherungsweise auf dem Gaußschen Knoten. Das ist vorteilhaft, denn im Gaußschen Knoten ändert sich das Strömungsprofil nicht mit der Geschwindigkeit des Fluids. Insgesamt ergibt das eine höhere Messgenauigkeit. Messpfade, für die das besonders gut zutrifft, wären zum Beispiel folgende Messpfade:

    124-1 Alternative A
    124-2 Alternativen A und B
    124-3 Alternativen B und C
    124-4 Alternativen B und C
    124-5 Alternativen B und D.

## Patentansprüche

1. Durchflussmessgerät zur Messung des Durchflusses eines Fluids (18) mit

    - einem Messaufnehmer (112), der eine Rohrleitung (114) für das Fluid (18) aufweist,
    - zwei, in Längsrichtung (126) der Rohrleitung (114) beabstandete phased-array Ultraschallwandlereinheiten (120, 122), die Ultraschallsignale in verschiedene Winkel abstrahlen und empfangen können,
    - einer Steuer- und Auswerteeinheit (128) zur Ansteuerung der Ultraschallwandlereinheiten (120, 122) und Auswertung der empfangenen Ultraschallsignale und Bestimmen des Durchflusses unter Verwendung der Laufzeit der Ultraschallsignale auf den Messpfaden (124),
    - wobei die Ultraschallwandlereinheiten (120, 122) zwischen sich je nach Winkel der abgestrahlten Ultraschallsignale wenigstens zwei Messpfade (124-0, 124-1, 124-2, 124-3, 124-4, 124-5) definieren, auf denen die Ultraschallsignale von einer zur anderen Ultraschallwandlereinheit gelangen,
    - wobei wenigstens einer der Messpfade (124-1, 124-2, 124-3, 124-4, 124-5) wenigstens eine Reflexion (130) an einer Rohrwand (116) der Rohrleitung (114) aufweist und durch die Reflexion bzw. Reflexionen Pfadabschnitte (124-1a, 124-1b) definiert sind,

    **dadurch gekennzeichnet, dass**
    die Ultraschallwandlereinheiten (120, 122) in einem Einbauwinkel ($\beta$) liegen, der zwischen 20° und 140° liegt, wobei der Einbauwinkel der Winkel ist, der in Längsrichtung entlang der Mittelachse der Rohrleitung gesehen, die beiden Verbindungen zwischen den Ultraschallwandler und der Mittelachse einschließt.

2. Durchflussmessgerät nach Anspruch 1, **dadurch gekennzeichnet, dass** der Einbauwinkel zwischen 30° und 50° liegt.

3. Durchflussmessgerät nach einem der vorhergehenden Ansprüche, **dadurch gekennzeichnet, dass** für die Pfadabschnitte gilt, dass r/R zwischen 0,3 und 0,65 liegt, wobei R der Rohrdurchmesser ist und r der kürzeste Abstand eines Pfadabschnittes zur Mittelachse der Rohrleitung ist.

4. Durchflussmessgerät nach einem der vorhergehenden Ansprüche, **dadurch gekennzeichnet, dass** nicht mehr als fünf Reflexionen pro Messpfad vorliegen.

## Claims

1. Flowmeter for measuring the flow rate of a fluid (18) with

    - a meter body (112) having a conduit (114) for the fluid (18),
    - two phased-array ultrasonic transducer units (120, 122) spaced apart in the longitudinal direction (126) of the conduit (114) and capable of radiating and receiving ultrasonic signals at different angles,

- a control and evaluation unit (128) for controlling the ultrasonic transducer units (120, 122) and evaluating the received ultrasonic signals and determining the flow rate using the time-of-flight of the ultrasonic signals on the measuring paths (124),

- wherein the ultrasonic transducer units (120, 122) define at least two measurement paths (124-0, 124-1, 124-2, 124-3, 124-4, 124-5) between them, depending on the angle of the emitted ultrasonic signals, along which paths the ultrasonic signals pass from one to the other ultrasonic transducer unit,

- wherein at least one of the measurement paths (124-1, 124-2, 124-3, 124-4, 124-5) has at least one reflection (130) on a conduit wall (116) of the conduit (114) and path sections (124-1a, 124-1b) are defined by the reflection or reflections,

**characterized in that**

- the ultrasonic transducer units (120, 122) are at an installation angle ($\beta$) that is between 20° and 140°, wherein the installation angle is the angle, which lies between the linkings between the ultrasonic transducers and the central axis if looked along the longitudinal direction.

2. Flowmeter according to claim 1, **characterized in that** the installation angle is between 30° and 50°.

3. A flowmeter according to any preceding claim, **characterized in that** for the path sections r/R is between 0.3 and 0.65, where R is the conduit diameter and r is the shortest distance of a path section to the center.

4. Flowmeter according to any preceding claim, **characterized in that** there are no more than five reflections per measurement path.

**Revendications**

1. Débitmètre pour mesurer le débit d'un fluide (18) avec

- un corps de compteur (112) comportant un conduit (114) pour le fluide (18),

- deux transducteurs ultrasoniques à réseau phasé (120, 122) espacés dans la direction longitudinale (126) du conduit (114) et capables d'émettre et de recevoir des signaux ultrasoniques à des angles différents,

- une unité de commande et d'évaluation (128) pour commander les transducteurs ultrasoniques (120, 122) et évaluer les signaux ultrasoniques reçus et déterminer le débit à l'aide du temps de vol des signaux ultrasoniques sur les voies de mesure (124),

- dans lequel les transducteurs ultrasoniques (120, 122) définissent au moins deux voies de mesure (124-0, 124-1, 124-2, 124-3, 124-4, 124-5) entre eux, en fonction de l'angle des signaux ultrasoniques émis, le long desquels les signaux ultrasoniques passent de l'un à l'autre des transducteurs ultrasoniques,

- dans lequel au moins une des voies de mesure (124-1, 124-2, 124-3, 124-4, 124-5) présente au moins une réflexion (130) sur une paroi (116) du conduit (114) et les sections de la voie (124-1a, 124-1b) sont définies par la réflexion ou les réflexions,

**caractérisé en ce que**

- les transducteurs ultrasoniques (120, 122) se trouvent à un angle d'installation ($\beta$) compris entre 20° et 140°, l'angle d'installation étant l'angle qui se situe entre les liaisons entre les transducteurs ultrasoniques et l'axe central si l'on regarde le long de la direction longitudinale.

2. Débitmètre selon la revendication 1, **caractérisé en ce que** l'angle d'installation est compris entre 30° et 50°.

3. Débitmètre selon l'une des revendications précédentes, **caractérisé en ce que** pour les sections de la voie, r/R est compris entre 0,3 et 0,65, où R est le diamètre du conduit et r est la distance la plus courte d'une section de la voie par rapport au centre.

4. Débitmètre selon l'une des revendications précédentes, **caractérisé en ce qu'**il n'y a pas plus de cinq réflexions par voie de mesure.

Fig. 1

Fig. 4

Fig. 2

Fig. 3

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140366642 A1

- US 2006117867 A1

**In der Beschreibung aufgeführte Nicht-Patentliteratur**

- **TOBIAS ERIKSSON.** Development of piezoelectric and electrodynamic flexural transducers for air-coupled ultrasonics. Univ. of Warwick, September 2016

- **KANG, LEI ; FEENEY, ANDREW ; SU, RILIANG ; LINES, DAVID ; JÄGER, AXEL ; WANG, HAN ; AR-NAUDOV, YAVOR ; EMILOV, RAMADAS ; SIVAR-AM NISHAL ; KUPNIK, MARIO.** Two-dimensional flexural ultrasonic phased-array for flow measurement. *2017 IEEE International Ultrasonics Symposium (IUS), Washington, DC, USA,* 06. September 2017, ISSN 1948-5727